**Europäisches Patentamt**

**European Patent Office**

**Office européen des brevets**

(11) Numéro de publication : **0 411 994 B1**

## (12) FASCICULE DE BREVET EUROPEEN

(45) Date de publication du fascicule du brevet :
**21.10.92 Bulletin 92/43**

(21) Numéro de dépôt : **90402162.3**

(22) Date de dépôt : **26.07.90**

(51) Int. Cl.⁵ : **G01B 5/06**

(54) **Appareil pour le contrôle de l'épaisseur d'une plaque en matière compressible, notamment en carton ondulé.**

(30) Priorité : **01.08.89 FR 8910365**

(43) Date de publication de la demande :
**06.02.91 Bulletin 91/06**

(45) Mention de la délivrance du brevet :
**21.10.92 Bulletin 92/43**

(84) Etats contractants désignés :
**AT BE CH DE DK ES FR GB GR IT LI LU NL SE**

(56) Documents cités :
**DE-A- 3 544 610**
**DE-B- 1 623 251**
**FR-A- 2 569 849**
**US-A- 1 927 821**

(73) Titulaire : **SOPRECO SOCIETE POUR LA PROMOTION ET L'EXPANSION DU CARTON ONDULE Société à Responsabilité Limitée dite**
**20, Rue Octave Feuillet**
**F-75116 Paris (FR)**

(72) Inventeur : **Azens, Jean-Jacques**
**40 rue des Etats Généraux**
**F-78000 Versailles (FR)**

(74) Mandataire : **Jolly, Jean-Pierre et al**
**Cabinet Jolly 54, rue de Clichy**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un appareil permettant de contrôler l'épaisseur d'une plaque en matière compressible par exemple en carton ondulé.

Il est connu de procéder régulièrement à la mesure de l'épaisseur des plaques de carton sortant d'une onduleuse, afin de vérifier qu'elles ont bien l'épaisseur requise.

Par le brevet FR-A-2 569 849, on connaît un appareil de contrôle d'épaisseur selon le préambule de la revendication 1.

La surface d'appui est munie d'une aiguille fixe qui traverse la plaque de matière et fait saillie au-dessus d'elle. L'aiguille de détection est susceptible d'être poussée par l'aiguille fixe lorsque le corps se déplace de sa position haute à sa position basse.

Toutefois, un tel appareil présente plusieurs inconvénients :

- sa mise en oeuvre est compliquée, car pour déterminer l'épaisseur de la plaque en carton, il est nécessaire d'effectuer deux lectures sur le comparateur, correspondant à deux charges différentes que l'on applique au corps,
- sa structure est encombrante du fait que lesdites charges sont portées par un système de leviers montés pivotants sur un bâti support,
- l'aiguille fixe perce la plaque de carton et l'endommage donc définitivement.

Le brevet US-A-1 927 821 concerne également un appareil de mesure de l'épaisseur de feuilles en matière plastique qui comporte deux roues tranchantes destinées à couper la feuille sur toute son épaisseur. Il présente donc le grave inconvénient d'endommager la feuille.

Le modèle d'utilité allemand n° 7 015 142 présente également le même défaut puisqu'il comporte un plongeur se terminant par une pointe qui perce la feuille.

La présente invention a pour but de remédier à ces inconvénients de la technique antérieure connue en proposant un appareil pour le contrôle de l'épaisseur d'une plaque en matière compressible, par exemple en carton ondulé, qui soit léger afin de pouvoir être déplaçable en n'importe quel point, qui ne nécessite pour son fonctionnement aucun réglage d'un quelconque de ses éléments, qui soit d'une grande résistance mécanique et donc non sujet aux détériorations, et enfin qui n'endommage pas l'échantillon à tester.

Ces buts sont atteints grâce à l'appareil selon la partie caractérisante de la revendication 1.

Pour effectuer un contrôle d'épaisseur, on règle préalablement le zéro du comparateur en tenant en l'air l'appareil par sa poignée, puis on pose l'appareil sur la plaque à contrôler. L'aiguille de lecture dévie et se place devant une graduation qui indique la profondeur d'enfoncement du corps pesant dans la plaque.

Ainsi, l'épaisseur de la plaque est donnée directement par une seule lecture contrairement à l'appareil selon le brevet FR-A-2 569 849 qui nécessitait deux lectures.

L'appareil selon l'invention peut être porté en bloc à la main au moyen d'une anse située au-dessus de la paroi de fond de la couronne et dont les bras traversent avec jeu des lumières percées dans ladite paroi de fond et sont fixés, de préférence avec des moyens de fixation amovibles, à la paroi latérale du corps pesant.

Lesdites lumières sont avantageusement en forme d'arc de cercle afin de permettre le pivotement de l'ensemble de l'anse et du corps pesant autour de l'axe de ce dernier et d'asseoir ainsi au mieux le corps pesant sur la plaque de matière sans bouger la couronne.

Le corps intérieur est rendu pesant par tout moyen de lestage approprié. Par exemple, le corps pesant peut être en forme de cuve cylindrique sur le fond de laquelle se dresse une colonne tubulaire coaxiale, de même hauteur que la paroi latérale du corps pesant, l'espace annulaire compris entre ladite paroi latérale et la colonne étant rempli d'une coulée de matière lourde solidifiée, par exemple du plomb.

La colonne tubulaire du corps pesant présente sur toute sa hauteur un taraudage qui le traverse de part en part. Dans l'extrémité inférieure dudit taraudage est vissée une pièce de pression comprenant une tige filetée vissée dans le taraudage et une tête plate dont la face inférieure peut être amenée, par vissage, dans le même plan que le bord inférieur de la couronne.

De plus, la surface de ladite tête plate est calculée en fonction de la masse de l'ensemble du corps pesant de manière que sous l'effet de la pression qui en résulte, la tête comprime la plaque de matière sous une pression déterminée.

On notera que le même appareil pourra servir pour contrôler l'épaisseur de plaque de matière de résistances différentes. Il suffit pour cela d'utiliser une vis ayant une tête de diamètre choisi pour qu'elle comprime l'échantillon de matière sous une pression déterminée.

Le comparateur est constitué de façon connue en soi par un micromètre, du type comprenant un boîtier d'où fait saillie une aiguille de détection, qui est susceptible d'être enfoncée dans ledit boîtier à l'encontre de moyens élastiques de rappel, ce mouvement entraînant, par l'intermédiaire de moyens de renvoi, le déplacement d'une aiguille de lecture devant une échelle graduée qui indique la course d'enfoncement du corps pesant dans la plaque en matière compressible.

Ledit boîtier est fixé à l'extérieur sur la paroi de fond de la couronne et son aiguille de détection traverse librement ladite paroi de fond, son extrémité faisant saillie à l'intérieur de la colonne tubulaire, et prenant appui sur une surface fixe de référence du corps pesant.

Cette surface de référence est constituée par l'extrémité d'une vis sans tête qui est réglée par vissage dans le taraudage de la colonne du corps pesant.

Une forme de réalisation de l'appareil de contrôle selon l'invention ainsi que son mode d'utilisation seront décrits à présent à titre d'exemple non limitatif en regard du dessin annexé dans lequel :

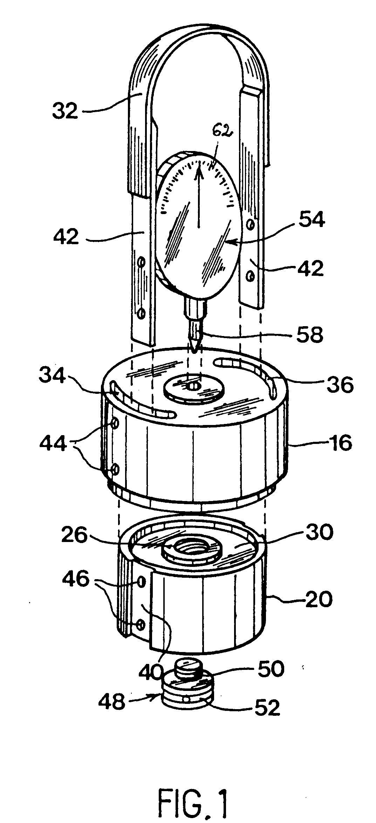

La figure 1 est une vue en perspective éclatée de l'appareil de contrôle de l'épaisseur ;

La figure 2 est une vue en coupe axiale de l'appareil en position soulevée au-dessus d'une plaque de carton ondulé ; et

La figure 3 est une vue analogue, l'appareil étant posé sur la plaque de carton ondulé.

L'invention sera expliquée ci-après à propos de la mesure de l'épaisseur d'une plaque de carton ondulé 10, mais il va de soi qu'elle s'applique à toute plaque en matière quelconque compressible.

L'appareil comprend un corps externe ou couronne 12 en forme de pot cylindrique retourné, pourvue d'une paroi de fond 14 tournée vers le haut d'une jupe cylindrique 16 d'axe vertical à bord périphérique aminci 18.

A l'intérieur de la couronne est logé coaxialement un corps pesant 20 en forme de cuve cylindrique de diamètre extérieur inférieur au diamètre intérieur de la couronne, de sorte qu'il peut se déplacer sans frottement dans ce dernier. Le corps pesant comprend un fond 22 tourné vers le bas et une jupe cylindrique 24. Une colonne tubulaire 26 coaxiale à la jupe 24 se dresse sur le fond 22. Cette colonne est traversée axialement de part en part par un taraudage 28.

L'espace tubulaire défini entre la jupe 24 et la colonne 26 reçoit une coulée de matière de lestage 30, par exemple de plomb.

L'appareil peut être transporté au moyen d'une anse 32 dont les extrémités sont fixées à deux tiges plates, 42 qui traversent avec jeu deux lumières 34, 36, percées dans le fond 14 du corps externe. Les extrémités de ces tiges sont fixées, par exemple au moyen de vis 38, dans des rainures axiales 40 de la paroi latérale du corps pesant 20. La couronne présente sur sa paroi latérale des trous 44 pour le passage des vis 38.

L'assemblage de l'anse au corps pesant se fait donc de la façon suivante : le corps pesant se trouvant à l'intérieur de la couronne, on fait tourner cette dernière autour de son axe afin d'amener en coïncidence les trous 44 et les trous des vissages 46 du corps pesant. On engage ensuite les tiges 42 solidaires de l'anse dans les lumières 34, 36 et on fait coulisser leurs extrémités dans les rainures 40. Les tiges peuvent alors être solidarisées du corps pesant en faisant passer les vis 38 à travers les trous 44.

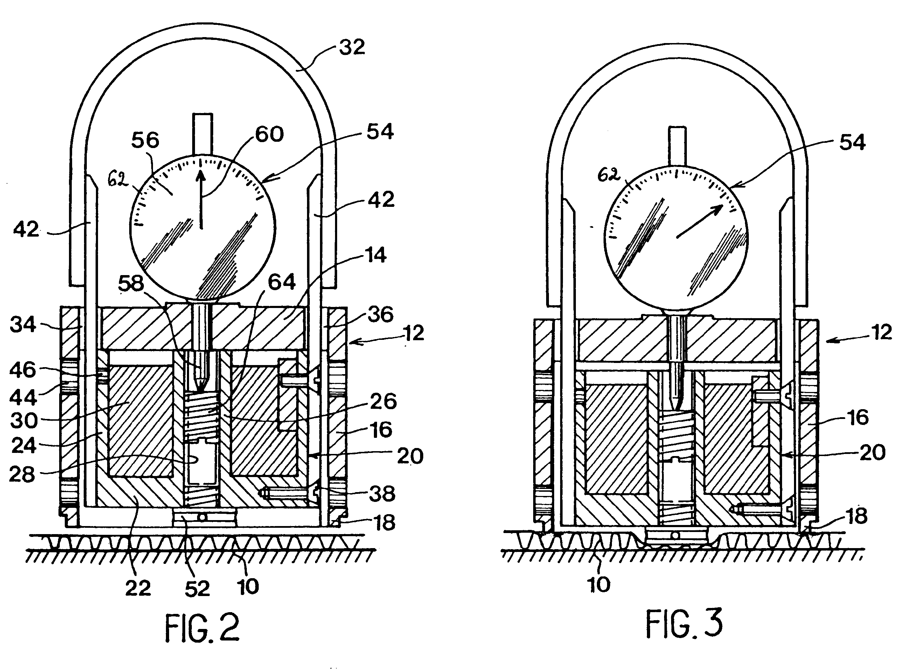

Lorsqu'on soulève l'appareil en le tenant par son anse, le corps pesant 20 est en butée contre la face interne de la paroi de fond 14 de la couronne, comme le montre la figure 2.

Sur la face inférieure du corps pesant est fixée une pièce de pression 48 comprenant une tige filetée 50 qui se visse dans le taraudage 28 et une tête plate 52 de plus grand diamètre.

Les dimensions des différents éléments sont choisies pour que lorsque le corps pesant est amené dans sa position haute (figure 2), la face inférieure de la tête 52 se trouve exactement dans le plan du bord inférieur 18 de la couronne.

Sur la paroi de fond 14 est fixé un comparateur 54 d'un type classique qui comprend un boîtier 56 d'où fait saillie une aiguille de détection 58. Celle-ci traverse la paroi de fond 14 et pénètre librement dans le taraudage 28. Cette aiguille peut être enfoncée dans le boîtier 56 à l'encontre de moyens élastiques de rappel non représentés et, dans ce mouvement, elle entraîne, par l'intermédiaire de moyens de renvoi, une aiguille de lecture 60 devant une échelle graduée 62.

L'extrémité de l'aiguille de détection 58 prend appui sur une surface fixe de référence constituée par la face supérieure d'une vis sans tête 64 qui est vissée dans le taraudage 28. Cette vis est positionnée à une distance donnée dans le taraudage 28.

On décrira à présent le mode d'utilisation de l'appareil : on transporte celui-ci, en le tenant par son anse 32, au-dessus de la plaque de carton ondulé 10. Le corps pesant 20 est alors en butée contre la paroi de fond 14 de la couronne. On règle manuellement le comparateur 54 pour amener le zéro de la graduation de lecture 62 devant l'aiguille.

On pose ensuite l'appareil sur la plaque 10. La couronne 12 se pose et exerce sur le carton une pression modérée donnée ne le déformant pratiquement pas, tandis que la tête 52 de la pièce de pression, sous l'action de la masse de l'équipage mobile constitué par le corps pesant 20 et l'anse 32, s'enfonce dans le carton. Ladite masse descend donc de la hauteur dont la tête plate de la pièce de pression a pénétré dans le carton. L'aiguille de lecture 60 dévie et se place devant une graduation indiquant la différence d'épaisseur de la plaque par l'enfoncement relatif du corps pesant par rapport à la couronne. Cette position est illustrée par la figure 3.

Pour obtenir différentes pressions déterminées du corps pesant sur des plaques, on doit adapter des pièces de pression à tête plate de diamètres donnés.

**Revendications**

1. Appareil pour le contrôle de l'épaisseur d'une plaque en matière compressible, par exemple en carton ondulé, du type comprenant :

   - un corps mobile entre une position haute où sa face inférieure affleure la surface de la plaque de matière, et une position basse où il repose de tout son poids sur ladite plaque et la comprime contre une surface d'appui fixe,
- et un comparateur comprenant une aiguille de détection mobile par rapport audit corps et susceptible d'entraîner une aiguille de lecture devant une échelle graduée, lorsque le corps se déplace de sa position haute à sa position basse,
caractérisé en ce que :
- ledit corps (20) est constitué par une pièce cylindrique pesante, montée coulissante à l'intérieur d'une pièce extérieure ou couronne (12) d'axe vertical, en forme de pot cylindrique retourné, qui est susceptible de prendre appui sans l'endommager, sur la plaque de matière compressible (10) par le bord inférieur (18) de sa paroi cylindrique (16),
- la position haute dudit corps étant définie lorsque son extrémité supérieure est en butée contre le fond (14) de la couronne, sa face inférieure étant alors exactement dans le même plan que ledit bord inférieur (18) de la couronne, et sa position basse étant définie lorsqu'il repose de tout son poids sur la plaque,
- le comparateur (54) est constitué par un micromètre comprenant un boîtier (56) fixé au-dessus de la paroi de fond (14) de la couronne, l'aiguille de détection (58) faisant saillie sous le boîtier, traversant librement ladite paroi de fond et prenant appui sur une surface fixe de référence (64) solidaire du corps pesant (20).

2. Appareil selon la revendication 1, caractérisé en ce qu'il peut être porté en bloc à la main au moyen d'une anse (32) située au-dessus de la paroi de fond (14) de la couronne et dont les bras traversent avec jeu des lumières (34, 36) percées dans ladite paroi de fond et sont fixés, de préférence avec des moyens de fixation amovibles (38), à la paroi latérale du corps pesant (20).

3. Appareil selon la revendication 2, caractérisé en ce que lesdites lumières (34, 36) sont en forme d'arc de cercle afin de permettre le pivotement de l'ensemble de l'anse (32) et du corps pesant (20) autour de l'axe de ce dernier et d'asseoir ainsi au mieux le corps pesant sur la plaque de matière sans bouger la couronne.

4. Appareil selon la revendication 1, caractérisé en ce que le corps pesant est en forme de cuve cylindrique sur le fond (22) de laquelle se dresse une colonne tubulaire coaxiale (26), de même hauteur que la paroi latérale (24) du corps pesant, l'espace annulaire compris entre ladite paroi latérale et la colonne étant rempli d'une coulée de matière dense solidifiée (30), par exemple du plomb.

5. Appareil selon la revendication 4, caractérisé en ce que la colonne tubulaire (26) présente sur toute sa hauteur un taraudage (28) qui le traverse de part en part et en ce que dans l'extrémité inférieure dudit taraudage est vissée une pièce de pression (48) comprenant une tige filetée (50) vissée dans le taraudage (28) et une tête plate (52) dont la face inférieure peut être amenée, par vissage, dans le même plan que le bord inférieur (18) de la couronne (12).

6. Appareil selon l'une des revendications 1 et 5, caractérisé en ce que ladite surface de référence est constituée par l'extrémité d'une vis sans tête (64) qui est réglée par vissage dans le taraudage (28) de la colonne (26) du corps pesant.

**Patentansprüche**

1. Vorrichtung zur Überwachung der Dicke einer Platte aus zusammendrückbarem Werkstoff, beispielsweise einer Wellpappe, welche folgendes aufweist:
- einen Körper, der zwischen einer oberen Stellung, in der seine Unterseite mit der Oberfläche der Werkstoffplatte bündig ist, und einer unteren Stellung, in der er mit seinem ganzen Gewicht auf der Platte aufliegt und diese gegen eine feststehende Auflagefläche zusammendrückt, beweglich ist,
- und eine Vergleichseinheit, die eine gegenüber dem Körper bewegliche Erfassungszunge aufweist, welche eine Anzeigenadel vor einer Anzeigeskala führen kann, wenn sich der Körper von seiner oberen Stellung in seine untere Stellung bewegt,
**dadurch gekennzeichnet,**
- daß der Körper (20) aus einem schweren zylindrischen Teil besteht, das gleitend im Inneren eines äußeren Teils bzw. eines Mantels (12) mit vertikaler Achse in Form eines umgestülpten zylindrisches Topfes angeordnet ist und auf die Platte aus zusammendrückbarem Werkstoff (10) über den unteren Rand (18) seiner zylindrischen Wandung (16) aufsetzbar ist, ohne diese zu beschädigen,
- daß die obere Stellung des Körpers dann vorliegt, wenn sein oberes Ende gegen den Boden (14) des Mantels anliegt, wobei sich nun seine Unterseite genau in derselben Ebene wie der untere Rand (18) des Mantels befindet, während seine obere Stellung dann vorliegt, wenn er mit seinem ganzen Gewicht auf der Platte aufliegt,
- daß die Vergleichseinheit (54) aus einem Mikrometer besteht, das ein unterhalb der Bodenwandung (14) des Mantels befestigtes Gehäuse (56) aufweist, wobei die Erfassungszunge (58) oberhalb des Gehäuses vorsteht und dabei freibeweglich durch die Bodenwandung hindurchgeht und sich auf einer feststehenden, mit dem schweren Körper (20) festverbundenen Bezugsfläche (64) abstützt.

2. Vorrichtung nach Anspruch 1,
   **dadurch gekennzeichnet,** daß sie als Block an einem über der Bodenwandung (14) des Mantels angeordneten Bügel (32) von Hand tragbar ist, dessen Schenkel mit Spiel durch in die Bodenwandung eingebohrte Langlöcher (34, 36) geführt sind und vorzugsweise mittels lösbarer Befestigungsmittel (38) an der Seitenwandung des schweren Körpers (20) befestigt sind.

3. Vorrichtung nach Anspruch 2,
   **dadurch gekennzeichnet,** daß die Langlöcher (34, 36) kreisbogenförmig ausgebildet sind, so daß die aus Bügel (32) und schwerem Körper (20) bestehende Anordnung um die Achse des letzteren schwenkbar und somit der schwere Körper besser auf die Werkstoffplatte aufsetzbar ist, ohne den Mantel zu bewegen.

4. Vorrichtung nach Anspruch 1,
   **dadurch gekennzeichnet,** daß der schwere Körper am Boden die Form eines zylinderförmigen Fasses (22) hat, von dem aus sich eine koaxiale rohrförmige Säule (26) nach erhebt, welche die gleiche Höhe wie die Seitenwandung (24) des schweren Körpers aufweist, wobei der zwischen der Seitenwandung und der Säule eingeschlossene Ringraum mit einer Masse aus verfestigtem dichten Material (30), beispielsweise Blei, ausgegossen ist.

5. Vorrichtung nach Anspruch 4,
   **dadurch gekennzeichnet,** daß die rohrförmige Säule (26) über ihre gesamte Länge mit einem sie vollständig durchziehenden Innengewinde (28) versehen ist,, und daß in das untere Ende des Innengewindes ein Druckteil (48) mit einer Gewindestange (50) und einem flachen Kopf (52) eingeschraubt ist, deren Unterseite durch Ein- und Ausschrauben auf gleiche Ebene wie der untere Rand (18) des Mantels (12) gebracht werden kann.

6. Vorrichtung nach einem der Ansprüche 1 und 5,
   **dadurch gekennzeichnet,** daß die Bezugsfläche aus dem Ende eines Gewindestifts (64) besteht, der durch Ein- bzw. Ausschrauben im Innengewinde (28) der Säule (26) des schweren Körpers regulierbar ist.

## Claims

1. An apparatus for checking the thickness of a sheet of compressible material, for example of corrugated cardboard, of the type comprising:
   - a body movable between an upper position, where its lower face is level with the surface of the sheet of material, and a lower position where it rests with all its weight on said sheet and compresses it against a fixed support surface,
   - and a comparator comprising a detection needle movable with respect to said body and capable of driving a reading needle in front of a graduated scale, when the body moves from its upper position to its lower position, characterized in that:
   - said body (20) consists of a heavy cylindrical piece mounted slidingly inside an outer piece or ring (12) with a vertical axis, in the form of an upturned cylindrical pot, which is capable of resting on the sheet of compressible material (10), without damaging it, by the lower edge (18) of its cylindrical wall (16),
   - the upper position of said body being defined as when its upper end abuts against the base (14) of the ring, its lower face then being in exactly the same plane as said lower edge (18) of the ring, and its lower position being defined as when it rests with all its weight on the sheet,
   - the comparator (54) consists of a micrometer comprising a case (56) fixed above the base wall (14) of the ring, the detection needle (58) projecting under the case, passing freely through said base wall and resting on a fixed reference surface (64) integral with the heavy body (20).

2. An apparatus according to claim 1, characterized in that it may be carried en bloc by hand by means of a handle (32) which is situated above the base wall (14) of the ring and whose arms pass with play through holes (34, 36) formed in said base wall and are fixed, preferably with removable fastening means (38), to the side wall of the heavy body (20).

3. An apparatus according to claim 2, characterized in that said holes (34, 36) are in the form of arcs of a circle to enable pivoting of the assembly consisting of the handle (32) and heavy body (20) about the axis of the latter and thus to place the heavy body on the sheet of material in the best way without moving the ring.

4. An apparatus according to claim 1, characterized in that the heavy body is in the form of a cylindrical vessel on the base (22) of which stands a coaxial tubular column (26), of the same height as the side wall (24) of the heavy body, the annular space between said side wall and the column being filled with cast solidified dense material (30), for example lead.

5. An apparatus according to claim 4, characterized in that the tubular column (26) has over its entire height an internal screw thread (28) which passes right through it and in that into the lower end of said internal screw thread there is screwed a pressure piece (48) comprising a threaded stem (50) screwed into the internal screw thread (28) and a flat head (52) whose lower face may be brought, by screwing, into the same plane as the lower edge (18) of the ring (12).

6. An apparatus according to either one of claims 1 and 5, characterized in that said reference surface consists of the end of a headless screw (64) which is regulated by screwing into the internal screw thread (28) of the column (26) of the heavy body.

FIG. 1

FIG. 2

FIG. 3

EP 0 411 994 B1